# EUROPEAN PATENT SPECIFICATION

(11) **EP 0 423 851 B1**
(45) Date of publication and mention of the grant of the patent: **18.01.1995**
(21) Application number: 90201346.5
(22) Date of filing: 28.05.1990
(51) Int. Cl.: B25B 25/00, B25B 27/14

(54) **Lock wire securing tool**
Werkzeug zum Befestigen von Verriegelungsdraht
Outil pour la mise en place de fil de verrouillage

(30) Priority: 17.10.1989 US 422574
(43) Date of publication of application: 24.04.1991
(73) Proprietor: BERGEN CABLE TECHNOLOGIES, INC., Lodi New Jersey 07644 (US)
(72) Inventor: Plasse, Michel L., Hackensack, New Jersey 07601 (US); Carr, Thomas E., East Brunswick, New Jersey 08816 (US)
(74) Representative: Donné, Eddy

(56) References cited:
- EP-A- 0 093 953
- EP-A- 0 388 198
- US-A- 3 008 234

## Description

The present invention relates to a tool for applying a ferrule to a safety cable passing through a plurality of threaded fasteners to prevent the unintentional unthreading of such fasteners.

In rotating machinery having close tolerances between the rotating and the stationary portions, such as turbines, it is imperative that all objects, no matter how small, be kept from contacting the rotating elements of the machinery. The presence of any foreign object could result in the catastrophic failure of the entire rotating machinery.

Such machinery is inherently complex and requires the usage of many nuts, bolts, screws and other threaded fasteners to assemble all of the components of the machine. Since the operation of such machinery may involve very high rotating speeds and induce vibrations into the machine elements, it is necessary to provide some means for preventing the inadvertent unthreading of the numerous threaded fasteners.

It is known to apply lock wires to threaded fasteners to prevent their inadvertent unthreading. Typically, the lock wire passes through a transverse hole in at least two threaded fasteners and is twisted back on itself in alternating clockwise and counterclockwise directions between the threaded fasteners. The process is duplicated between additional threaded fasteners until the entire threaded fastener pattern has been wired. Following the required stringing and twisting, the lock wire is cut and bent into a certain position.

While the known lock wire has provided satisfactory results, it requires a very time consuming and laborious application process. Due to the dependency upon the operators skill in twisting the lock wire, often the final result is unsatisfactory due to variations in the quantity and tautness of the twists, and the variations in the tension of the lock wire. It has been estimated that annual losses of approximately $10,000,000 are incurred just from re-working unacceptable lock wire assemblies.

It is known from EP A 0 388 198 which belongs to the state of the art pursuant to Article 54(3)EPC that safety cable may be applied to fasteners and secured thereto by ferrule elements crimped at opposite ends of the safety cable. It is also known from U.S. 1,182,602, U.S. 2,267,532 and U.S. 2,764,861 that rope, strand or wire sealing elements may be applied to the open tops of containers by winding same about the containers, applying a tension to the rope, string or wire and then crimping a ferrule element to the rope, string or wire to retain same in place for permanently closing the top of the container. Such tools include a device for applying tension to the strand seal element and then separately crimping a ferrule to secure the strand against loosening.

It is also known from U.S. 3,008,234 that cutting, punching and crimping tools may be hydraulically actuated.

### SUMMARY OF THE INVENTION

The present invention relates to a ferrule applicator tool for permanently attaching a ferrule having an aperture extending along a central axis to a tensionned flexible tension element extending through the ferrule, and including a manipulable body portion having a longitudinal axis and including proximal and distal end areas, a ferrule retainer at the distal end area of the body portion for retaining a ferrule in a position for receiving a flexible tension element inserted through the ferrule with the ferrule central axis extending in a direction generally transverse to the body portion longitudinal axis. The tool moreover includes a ferrule deforming device connected to the body portion for permanently deforming a ferrule located in the ferrule retainer and a means for actuating the ferrule deforming device to move same in a direction generally parallel to the body portion longitudinal axis to thereby deform a ferrule located in the ferrule retainer, cf. the above mentioned U.S. 3,008,234. The claimed tool further includes a movable tension element gripper connected to the body portion for gripping a tension element extending through a ferrule located in the ferrule retainer, a tension device connected to the body portion and operatively associated with the tension element gripper for exerting a tensionning force on the flexible element extending through the ferrule located in the ferrule retainer and gripped by the gripper, and an actuator for actuating the tensioning device so that it causes a gripped tension element extending through a ferrule located in the ferrule retainer to be moved through the ferrule and toward the proximal end of the body portion for tensioning the tension element.

The invention also relates to a process for connecting together a series of threaded fastener elements that includes a first and last element, including the following steps: providing apertures in the elements for receiving a flexible tension element; threading an elongated flexible tension element forwardly through the apertures serially from the first to the last element of the series; providing a first motion stopping means on the first ends of the flexible tension element for preventing forward movement of the tension element through the aperture in the first element in the series; drawing a preset tension on the tension element in the forward direction from a location beyond the last element of the series while the first motion stopping means prevents forward motion of the tension element relative to the first element in the series; while maintaining said preset tension on the flexible tension element, securing the tension element against reverse longitudinal motion relative to the last element of the series by providing a second motion stopping means in the form of a permanently deformable ferrule having a central aperture to be permanently associated with the tension element adjacent and beyond the last element in the series, said ferrule preventing reverse longitudinal movement of the tension means through the aperture of the last element of the series so that the elements of the series are connected together. The step of permanently associating the ferrule with the tension element includes furthermore permanently crimping the ferrule onto the tension element using a tool as described in the previous paragraph, the tool including a longitudinal axis and having proximal and distal ends, a tension element tensioner arranged to exert a preset tension on the tension element by drawing the tension element toward the tool proximal end from the tool distal end and a ferrule crimper movable along the tool longitudinal axis for crimping a ferrule retained within the tool at its distal end onto the tension element, the tool being manipulable for placement of a distal end area of the tool and the ferrule adjacent the last element or fastener of the series, and wherein the steps of tensioning the tension element and crimping the ferrule include placing a ferrule in the tool, threading the tension element through the ferrule and into engagement with the tension element tensioner of the tool, activating the tensioner to tension the tension element to a pre-set tension while the tool is manipulated to place the distal end area of the tool against the last element or fastener of the series to counteract the tension load, activating the tool ferrule crimper while the pre-set tension is maintained on the tension element by the tensioner to crimp the ferrule to the tension element adjacent the last element of the fastener of the series, and removing the tool from the tension element.

### BRIEF DESCRIPTION OF THE DRAWINGS

Fig. 1 is a plan view of a known lock wire.

Fig. 2 is a plan view of a safety cable applied with the apparatus according to this invention.

Fig. 3 is a top view of the applicator according to the present invention.

Fig. 4 is a cross-sectional view taken along line 4-4 in Fig. 3.

Fig. 5 is a top view of the magazine according to the present invention for storing and inserting the ferrules.

Fig. 6 is an end view of the magazine viewed in the direction of arrow 6 in Fig. 5.

Fig. 7 is a cross-sectional view taken along 7-7 in Fig. 5.

Fig. 8 is a partial perspective view illustrating the magazine inserting a ferrule in the applicator according to the invention.

Fig. 9 is a partial, perspective view illustrating the application of the ferrule and the tensioning of the safety cable using the apparatus according to the invention.

Fig. 10 is a perspective view of the ferrule applied to the safety cable with the apparatus of the invention.

Fig. 11 is a schematic diagram of the hydraulic power supply system associated with the applicator according to the present invention.

### Detailed Description of the Preferred Embodiment

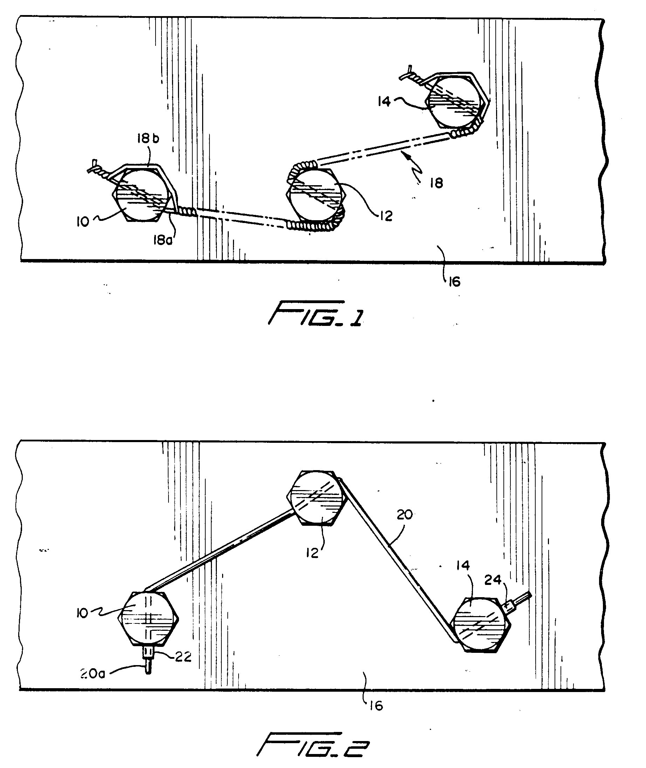

A known lock wire is illustrated in Fig. 1 wherein threaded fasteners 10, 12 and 14 are engaged with portion 16 of the rotating apparatus (not otherwise shown). The lock wire 18 comprises two strands 18a and 18b, twisted together at one end and separated such that strand 18a passes through a transverse opening in fastener 10 while strand 18b passes around the exterior of the fastener 10. The strands are twisted together on the opposite side of fastener 10 and pass through a transverse opening formed in fastener 12. The lock wire 18 continues until the last fastener, in this case fastener 14, whereupon one strand passes through a transverse opening in the fastener while the other strand passes around and contacts the exterior of the fastener. The strands are twisted together on the opposite side of fastener 14.

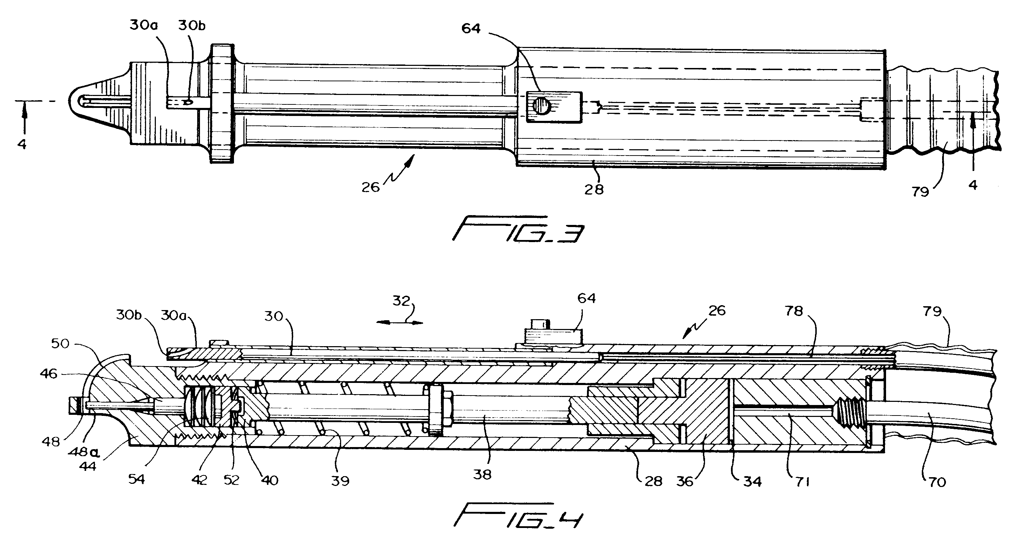

Fig. 2 illustrates a safety cable system applied using the apparatus according to the present invention. Threaded fasteners 10, 12 and 14 are engaged with machinery portion 16. Safety cable 20 comprises a single element of wire having a ferrule 22 fixed to end 20a. Safety cable 20 is passed through the transverse openings formed in the threaded fasteners 10, 12 and 14 until ferrule 22 bears against fastener 10. At this point, ferrule 24 is inserted over the end of cable 20 against fastener 14, a tension applied to the cable wire 20 and the ferrule 24 crimped onto the cable such that it bears against a side of fastener 14. Cable 20 is then cut off. The predetermined tension is maintained in cable 20 by the contact of ferrules 22 and 24 with threaded fasteners 10 and 14, respectively.

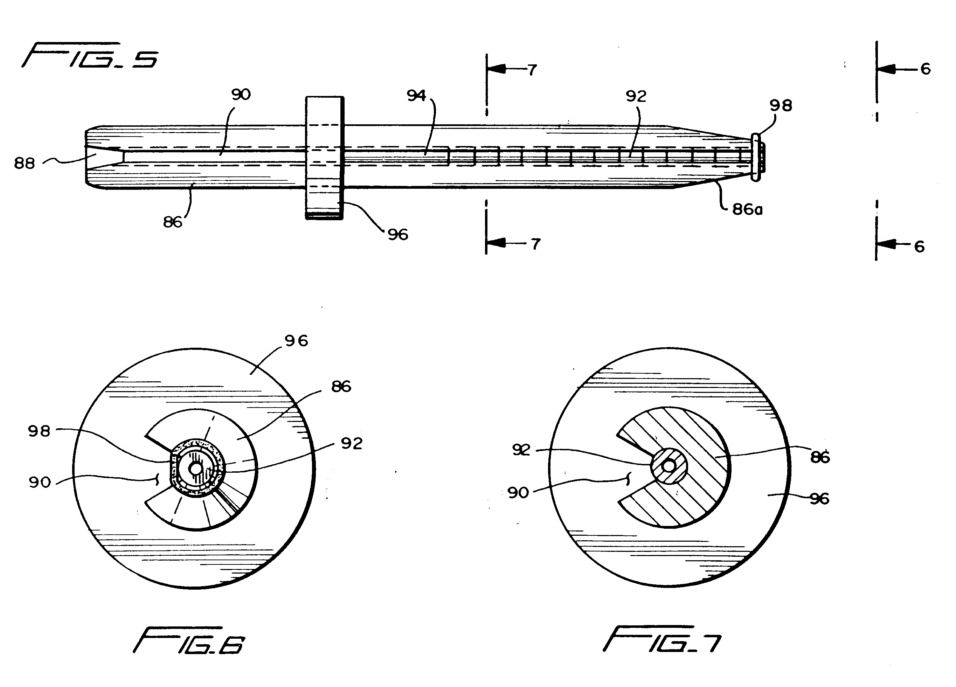

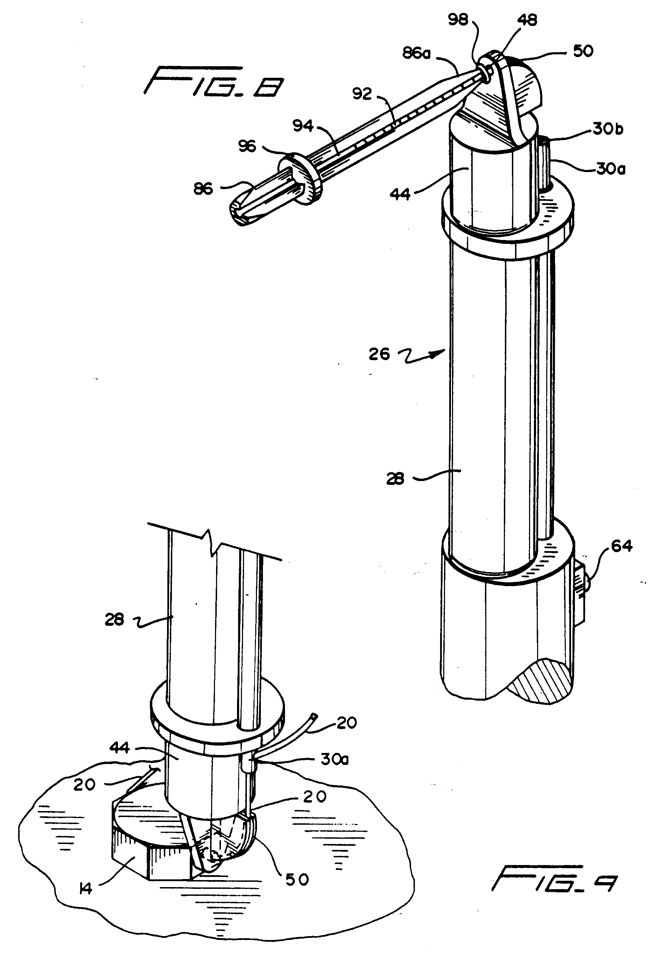

The applicator portion 26 of the apparatus for applying the ferrule to the second end of the cable is illustrated in Figures 3 and 4, and comprises a housing 28 having a tension rod 30 slidably mounted therein such that an end 30a of the tension rod extends outwardly of housing 28. End 30a defines a passage 30b from the distal end of the tension rod 30 to an upper surface thereof outside of the housing. Tension rod 30 is mounted in housing 28 so as to be axially movable in the directions of arrows 32.

Housing 28 also defines a chamber 34 in which a punch driver piston 36 is slidably retained so as to be also movable in the directions of arrows 32. A piston rod 38 extends from piston 36 and has a rear anvil retainer 40 attached thereto. A spring 39 is interposed between piston rod 38 and a crimp head 44 and biases the piston rod 38 toward the right as seen in Fig. 4.

A front anvil retainer 42 is arranged generally coaxially with piston rod 38 and is slidably mounted in crimp head 44 attached to housing 28. A crimping punch 46 is connected to and extends from front anvil retainer 42.

Crimp head 44 defines a ferrule opening 48 and a tension guide notch 50. Guide notch 50 is dimensioned to receive the safety cable 20 prior to the insertion of the end through passage 30b.

As illustrated in Fig. 4, front anvil retainer 42 is axially spaced from rear anvil retainer 40. This spaced position is maintained by a curved spring washer 52 which biases the front anvil retainer 42 toward the left. Additional curved spring washers 54 are located between the crimp head 44 and the front anvil retainer 42. The biasing forces of the respective spring washers 52 and 54 are selected such that when a gap is present between rear anvil retainer 40 and front anvil retainer 42, the punch 46 extends slightly into the ferrule opening 48. When a ferrule is inserted into 48, it displaces punch 46 to the right (as seen in Fig. 4) against the biasing force of spring washer 52. This biasing force urges the front anvil retainer 42 and consequently, the punch 46 toward the left to exert a frictional force on the ferrule located in opening 48. The frictional force exerted by punch 46 grips and retains the ferrule in opening 48 until it is applied to the safety cable. Opening 48 intersects a generally flat portion 48a of applicator body portion 26.

Applicator 26 is connected to the power supply indicated schematically in Fig. 11. The power supply comprises a sump reservoir 56 containing an amount of a hydraulic fluid. Pump/motor 58 has inlet tube 60 extending into the sump 56 and an outlet conduit 62. The operation of the pump/motor 58 is controlled, in known fashion, by switch 64 mounted on casing 28 of the applicator 26. Outlet conduit 62 is connected to pressure cycle controller 66 which, in turn, controls the supply of pressurized hydraulic fluid to tension cylinder 68 and to hydraulic supply line 70. Hydraulic supply line 70 is connected to the applicator 26 so as to communicate with chamber 34 via passage 71.

Tension cylinder 68 has an extendable and contractable piston rod 72 connected to bell crank 74 which is pivotally attached to a fixed structure at 76. Bell crank 74 is also connected to flexible tension rod 78, the opposite end of which is attached to tension rod 30 as seen in Fig. 4. Spring 80 biases the bell crank 74 in a counterclockwise direction around its pivot attachment point 76. Hydraulic supply line 70 and flexible tension rod 78 may be covered by a boot 79 extending from the applicator 26 to the power supply and formed of a flexible material.

Thus, as can be seen, when the pressure cycle controller 66 supplies hydraulic fluid to the tension cylinder 68 via conduit 69 causing extension of the piston rod 72 in the direction of arrow 82, bell crank 74 will pivot in a clockwise direction about pivot attachment point 76, moving the flexible tension rod 78 in the direction of arrow 84. As viewed in Fig. 4, this will move tension rod 30 toward the right relative to the casing 28 and the crimp head 44, thereby tensioning a lock wire inserted into passage 30b.

Pressure cycle controller 66 has a known pressure relief/bypass valve 67 to limit the hydraulic pressure that can be applied to tension cylinder 68. Once this predetermined pressure limit has been reached, the excess hydraulic fluid is returned to the sump 56 via conduit 86. By limiting the hydraulic pressure supplied to the tension cylinder 68, the amount of force imparted to flexible rod 78, tension rod 30, and, consequently, to the safety cable 20 will be limited to a predetermined value. Once this value is reached, pressure activated valve 65 opens and pressurized hydraulic fluid passes through line 70 into chamber 34 via passage 71 and urges piston 36, piston rod 38 and rear anvil retainer 40 to the left as shown in Fig. 4. The movement of the rear anvil retainer 40 deforms the spring washer 52 and brings the rear anvil retainer 40 into direct contact with front anvil retainer 42. Continued movement to the left causes crimping punch 46 to also move in this direction to apply a crimping force to a ferrule retained in opening 48. Gauges 75 and 77 may be provided on the power supply to provide a visual indication of the tension and crimping pressures, respectively.

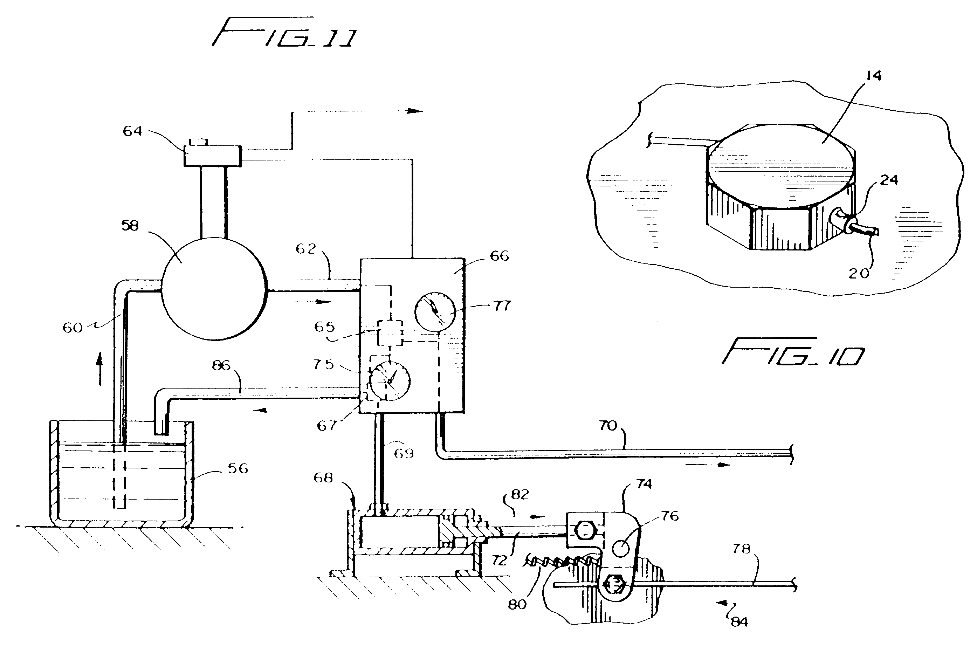

A magazine for retaining and inserting the ferrules into the applicator 26 is illustrated in Figs. 5, 6 and 7 and comprises a magazine body 86 with a tapered end portion 86a. Body 86 defines a centrally located, longitudinally extending opening 88 extending completely along its length, as well as a longitudinally extending slot 90. Slot 90 interconnects the opening 88 with the exterior surface of the body 86. As illustrated in Fig. 7, slot 90 may be tapered in a radially outwardly extending direction such that the distance between its innermost edges is less than the diameter of the opening 88.

The diameter of opening 88 is sufficient to slidably accommodate a plurality of ferrules 92 therein. Opening 88 also slidably accommodates a feed rod 94 which bears against one end of the supply of ferrules 92 and which is connected to handle 96. An elastic friction element 98 is located around the end of body 86 and, as illustrated in Fig. 6, exerts a slight frictional force on the ferrule 92 located closest to the end of body 86. This frictional force is sufficient to retain the ferrules 92 in the body 86 as the device is manipulated by the operator. Handle 96 and feed rod 94 are both slidable with respect to the main body 86, but the interconnection has sufficient frictional force to prevent the handle 96 and the feed rod 94 from falling out of the body 86 should it be manipulated into a vertical position.

The operation of the device according to the invention is illustrated in Figs. 8 and 9. As illustrated in Fig. 8, the magazine body 86 is placed against the crimp head 44 such that the opening 88 is in alignment with opening 48. Handle 96 and feed rod 94 are axially displaced with respect to the body 86 to force a ferrule 92 into the opening 48. As discussed previously, the ferrule 92 is frictionally retained in the opening 48 by the force of spring washer 52 urging the punch 46 against the ferrule 92. This force is sufficient to retain the ferrule 92 into the opening 48, but is insufficient to cause any deformation or crimping of the ferrule.

When the ferrule has been loaded into the opening 48, the magazine is removed from the applicator 26. The applicator 26 is manipulated such that cable 20 is passed through the ferrule retained in the opening 48, through the notch 50 and passes through passage 30b formed in tension rod 30, as shown in Fig. 9. The applicator 26 is manipulated to a position wherein ferrule 92 bears against the side of threaded fastener 14 and the switch 64 is actuated.

By actuating switch 64, hydraulic fluid is supplied to the tension cylinder 68, which, in turn, retracts the rod 30 further into the housing 28 to exert a tension on cable 20. The notch 50 is curved such that the wire adjacent to the ferrule retained in the applicator is tensioned in a direction in approximately coaxial alignment with the opening in the ferrule and the opening in the threaded fastener 14. Once the predetermined tension has been applied to cable 20, punch 46 is further displaced (toward to the left as viewed in Fig. 4) to deform and crimp the ferrule and fixedly attach it to the cable 20. Punch 46 is moved via its interconnection with front anvil retainer 42 which, at this point, is in direct contact with the rear anvil retainer 40 moved by its connection with piston 36 through piston rod 38.

Once the ferrule has been sufficiently deformed, the punch 46 will be withdrawn by reducing the hydraulic fluid pressure in chamber 34 and is retracted by the force exerted thereon by spring washers 54. Spring 39 returns piston 36 and piston rod 38 to their initial positions shown in Fig. 4. The operation is completed by cutting off the cable 20 extending beyond the ferrule 92.

The foregoing description is provided for illustrative purposes only and the scope of the invention is defined solely by the appended claims.

## Claims

1. A ferrule applicator tool (26) for permanently attaching a ferrule (24) having an aperture extending along a central axis to a tensioned flexible tension element (20) extending through the ferrule, and including a manipulable body portion (28) having a longitudinal axis and including proximal and distal end areas; a ferrule retainer (48) at the distal end area of the body portion (28) for retaining a ferrule in a position for receiving a flexible tension element inserted through the ferrule and with the central axis of the ferrule extending in a direction generally transverse to the body portion longitudinal axis; and a ferrule deforming device (46) connected to the body portion for permanently deforming a ferrule located in the ferrule retainer (48) and means for actuating said ferrule deforming device to move same in a direction generally parallel to the body portion longitudinal axis to deform a ferrule located in the ferrule retainer (48); characterized by a movable tension element gripper (30) connected to the body portion for gripping a tension element (20) extending through a ferrule located in the ferrule retainer (48); a tensioning device (78) connected to the body portion and operatively associated with the tension element gripper (30) for exerting a tensioning force on the flexible tension element (20) extending through a ferrule (24) located in the ferrule retainer (48) and gripped by the gripper; and an actuator (68) for actuating the tensioning device (78) so that it causes a gripped tension element extending through a ferrule located in the ferrule retainer to be moved through the ferrule and towards the proximal end of the body portion (28) for tensioning the tension element.

2. A ferrule applicator tool as claimed in claim 1 wherein the ferrule deforming device comprises a crimping punch (46); and further characterized by a punch positioner (42,52,54) for positioning the punch in a predetermined ferrule non-deforming gripping position relative to the ferrule retainer.

3. A ferrule applicator tool as claimed in claim 1, characterized in that said ferrule retainer (48) comprises an aperture defined by a sidewall area in said distal end body portion, said aperture being formed to receive and support a ferrule (24), said ferrule deforming device (46) is a crimping punch, including a ferrule engaging distal end located so as to engage a ferrule retained in said aperture, and a punch locating arrangement (42,52,54) associated with the punch for normally locating the distal end of the punch adjacent said retainer aperture in a ferrule nondeforming engaging and gripping position.

4. A ferrule applicator tool as claimed in claim 3, characterized in that the distal end body portion includes a wall (48a) extending parallel to the longitudinal axis of the body portion, and the ferrule retainer aperture (48) intersects said wall; and wherein said distal end of said crimping punch is extendable into said aperture in a direction extending perpendicular to the sidewall of the aperture.

5. A ferrule application tool as claimed in any previous claim characterized by a fluid actuated driver (36) for driving the ferrule deforming device (46) towards a ferrule crimping position.

6. A ferrule applicator tool as claimed in claim 5 characterized in that said fluid actuated driver (36) is carried by the body portion.

7. A ferrule applicator tool as claimed in any previous claim characterized in that the actuator for moving said tensioning device (78) includes a fluid actuated motor (68).

8. A ferrule applicator tool as claimed in any previous claim, characterized by a pre-set tensioning system (66,67) for limiting the maximum tension applied by the tensioning device (78) to a tension element (20).

9. A process for connecting together a series of threaded fastener elements (10,12,14), said series including a first (10) and last (14) element of the series, comprising :
- providing apertures in said elements for receiving a flexible tension element (20);
- threading an elongated flexible tension element (20) forwardly through said apertures serially from the first to the last element of the series;
- providing a first motion stopping means (22) on a first end of the flexible tension element for preventing forward movement of the tension element through the aperture in the first element (10) in the series;
- drawing a pre-set tension on the tension element (20) in a forward direction from a location beyond the last element (14) of the series while the first motion stopping means (22) prevents forward movement of the tension element (20) relative to the first element of the series;
- while maintaining said pre-set tension on said flexible tension element, securing the tension element against reverse longitudinal motion relative to the last element of the series by providing a second motion stopping means (24) in the form of a permanently deformable ferrule having a central aperture to be permanently associated with the tension element (20) adjacent and beyond the last element (14) of the series, said ferrule preventing reverse longitudinal movement of the tension means through the aperture of the last element of the series, whereby the elements of the series are connected together, said step of permanently associating the ferrule with the tension element including permanently crimping the ferrule (24) onto the tension element (20); wherein the tensioning and crimping process is carried out by means of a ferrule applicator tool according to claim 1, the tool (26) including a longitudinal axis and having proximal and distal ends, a tension element tensioner (30,78) arranged to exert a pre-set tension on the tension element by drawing the tension element toward the tool proximal end from the tool distal end, and a ferrule crimper (46) movable along the tool longitudinal axis for crimping a ferrule retained within the tool at its distal end onto the tension element, said tool being manipulable for placement of a distal end area of the tool and the ferrule adjacent the last element (14) or fastener of the series, and wherein the steps of tensioning the tension element and crimping the ferrule include placing a ferrule in the tool, threading the tension element (20) through the ferrule (24) and into engagement with the tension element tensioner of the tool; activating the tensioner to tension the tension element to a pre-set tension while the tool is manipulated to place the distal end area of the tool against the last element or fastener of the series to counteract the tension load; activating the tool ferrule crimper while the pre-set tension is maintained on the tension element by the tensioner to crimp the ferrule to the tension element adjacent the last element or fastener of the series, and removing the tool from the tension element.

## Patentansprüche

1. Ein Klinkringmontagewerkzeug (26) zur dauerhaften Befestigung eines Klinkringes (24), mit einer sich eine Mittelachse entlang zu einem unter Spannung stehenden elastischen, sich durch den Klinkring hindurch erstreckenden Spannungselement (20), hin erstreckenden Öffnung, und einen manipulierbaren Körperteil (28), mit einer Längsachse und proximale und distale Bereiche umfassend; mit einer Klinkringhalterung (48) am distalen Endbereich des Körperteils (28) zum Festhalten eines Klinkringes in einer Lage geeignet zur Aufnahme eines, durch den Klinkring hindurch geführten elastischen Spannungselements und wobei die Mittelachse des Klinkringes sich in eine, im allgemeinen quer in bezug auf die Längsachse des Körperteils verlaufende Richtung erstreckt; und mit einer den Klinkring verformenden, mit dem Körperteil verbundenen Vorrichtung (46) zur dauerhaften Verformung eines in der Klinkringhalterung (48) befindlichen Klinkrings und mit Mitteln zur Betätigung besagter, den Klinkring verformender Vorrichtung um sich gemeinsam in eine Richtung, im allgemeinen parallel zur Längsachse des Körperteils, zu bewegen um einen in der Klinkringhalterung (48) befindlichen Klinkring zu verformen; gekennzeichnet von einem beweglichen, mit dem Körperteil verbundenen Spannungselementgreifer (30) zum Aufgreifen eines, sich durch einen, in der Klinkringhalterung (48) befindlichen, Klinkring hindurch erstreckenden Spannungselements (20), von einer mit dem Körperteil und in betätigender Weise mit dem Spannungselementgreifer (30) verbundenen Spannungsvorrichtung (78) zum Ausüben einer Spannkraft auf das, sich durch den in der Klinkringhalterung (48) befindlichen Klinkring (24) hindurch erstreckende elastische und vom Greifer aufgenommenen Spannungselement (20); und von einer Betätigungsvorrichtung (68) zur Betätigung der Spannvorrichtung (78), so dass sie ein angefasstes, sich durch einen in der Klinkringhalterung befindlichen Klinkring hindurch erstreckendes Spannungselement dazu bringt sich durch den Klinkring hindurch zum proximalen Ende des Körperteils (28) hin zu bewegen zur Aufspannung des Spannungselements.

2. Ein Klinkringmontagewerkzeug nach Anspruch 1, wobei die Klinkringverformungsvorrichtung einen Kräuselstempel (46) enthält; und weiter gekennzeichnet von einem Stempelpositioniervorrichtung (42, 52, 54) zur Positionierung des Stempels in eine vorherbestimmte, den Klinkring nicht verformende, Aufgreiflage in bezug auf die Klinkringhalterung.

3. Ein Klinkringmontagewerkzeug nach Anspruch 1, dadurch gekennzeichnet, dass besagte Halterung (48) eine von einem Seitenwandbereich im besagten distalen Ende des Körperteils bestimmte Öffnung aufweist, wobei besagte Öffnung zur Aufnahme und Unterstützung des Klinkringes (24) gebildet Wurde, wobei besagte Klinkringverformungsvorrichtung (46) ein Kräuselstempel ist, der ein, den Klinkring angreifendes distales Ende aufweist, das sich in einer derartigen Lage befindet, dass es einen sich in besagter Öffnung befindlichen Klinkring angreift, und eine, mit dem Stempel verbundene Stempelpositioniervorrichtung (42, 52, 54) zur normalen Lokalisierung des distalen Stempelendes nahe besagter Halterungsöffnung in eine, einen Klinkring nicht verformende, angreifende und aufgreifende Lage.

4. Ein Klinkringmontagewerkzeug nach Anspruch 3, dadurch gekennzeichnet, dass das distale Ende des Körperteils eine Wand (48a) aufweist, die sich parallel zur Längsachse des Körperteils erstreckt und dass die Klinkringhalterungsöffnung (48) besagte Wand kreuzt; und wobei besagtes distales Ende des besagten Kräuselstempels sich in besagte Öffnung erstrecken kann in eine Richtung die senkrecht auf der Seitenwand der Öffnung steht.

5. Ein Klinkringmontagewerkzeug nach irgendeinem der vorhergehenden Ansprüche, von einem flüssigkeitsbetätigten Treiber (36) zum Treiben der Klinkringverformungsvorrichtung (46) zu einer Klinkringkräuselposition gekennzeichnet.

6. Ein Klinkringmontagewerkzeug nach Anspruch 5, dadurch gekennzeichnet, dass besagter flüssigkeitsbetätigter Treiber (36) von dem Körperteil getragen wird.

7. Ein Klinkringmontagewerkzeug nach irgendeinem der vorhergehenden Ansprüche, dadurch gekennzeichnet, dass die Betätigungsvorrichtung zum Bewegen der besagten Spannungsvorrichtung (78) einen flüssigkeitsbetätigter Motor (68) enthält.

8. Ein Klinkringmontagewerkzeug nach irgendeinem der vorhergehenden Ansprüche, gekennzeichnet von einem vorher bestimmten Spannungssystem (66, 67) zur Begrenzung der von der Spannungsvorrichtung (78) auf das Spannungselement (20) ausgeübten Höchstspannung.

9. Verfahren zur Verbindung einer Reihe von, mit Gewinde versehenen, Befestigungelementen (10, 12, 14), wobei besagte Reihe ein erstes (10) und ein letztes (14) Element der Reihe aufweist, das nachfolgende Vorgänge enthält:
- besagte Elemente mit Öffnungen zur Aufnahme eines elastischen Spannungselements (20) versehen;
- ein verlängertes, elastisches Spannungselement (20) durch besagte Öffnungen der Reihe nach vom ersten bis zum letzten Element der Reihe in Vorwärtsrichtung hindurchschrauben;
- ein erstes Ende des elastischen Spannungselements mit einem ersten, die Bewegung hemmenden Mittel (22) versehen um eine Vorwärtsbewegung des Spannungselements durch die Öffnung im ersten Element (10) der Reihe hindurch vorzubeugen;
- eine vorher festgelegte Spannung von einer Position jenseits des letzten Elements (14) der Reihe aus in Vorwärtsrichtung auf das Spannungselement (10) ausüben, während das erste, die Bewegung hemmende, Mittel (22) eine Vorwärtsbewegung des Spannungselements (20) in bezug auf das erste Element der Reihe verhindert.
- während die besagte, vorher festgelegte, ausgeübte Spannung auf besagtes, elastisches Spannungselement gehandhabt bleibt, das Spannungselement gegen eine Rückwärtslängsbewegung in bezug auf das letzte Element der Reihe sichern, indem ein zweites, die Bewegung hemmendes, Mittel (24) vorgesehen wird in Form einer dauerhaft verformbaren Klinkringöffnung um andauernd mit dem Spannungselement (20) nahe dem letzten Element und jenseits des letzten Elements (14) der Reihe verbunden zu werden, wobei besagter Klinkring eine Längsbewegung in Rückwärtsrichtung des Spannungsmittels durch die Öffnung des letzten Elements der Reihe hindurch verhindert, wobei die Elemente der Reihe mit einander verbunden sind; wobei besagter Schritt der dauerhaften Verbindung des Klinkringes mit dem Spannungselement, die dauerhafte Befestigung durch Kräuseln des Klinkringes (24) auf das Spannungselement (20) einschliesst; wobei das Spannungs- und Kräuselverfahren mit Hilfe eines Klinkringmontagewerkzeugs nach Anspruch 1 ausgeführt wird, wobei das Werkzeug (26) eine Längsachse aufweist und ein proximales und distales Ende besitzt, eine Spannungsvorrichtung (30, 78) für das Spannungselement, derart angeordnet, dass eine vorher festgelegte Spannung auf das Spannungselement ausgeübt wird, indem das Spannungselement zum proximalen Werkzeugende hinzu und vom distalen Werkzeugende hinweg gezogen wird; und eine entlang der Längsachse des Werkzeugs bewegliche Klinkringklemmfassung (46), zur Befestigung durch Kräuseln eines am distalen Ende im Werkzeug festgehaltenen Klinkringes auf das Spannungselement, wobei besagtes Werkzeug manipulierbar ist zur Aufstellung eines distalen Endbereichs des Werkzeugs und des Klinkringes nahe dem letzten Element (14) oder Befestigungselement der Reihe, und wobei die Schritten in denen das Spannungselement unter Spannung gebracht wird und der Klinkring gekräuselt wird, das Anbringen eines Klinkringes in das Werkzeug mit einschliessen, wobei des Spannungselement (20) durch den Klinkring (24) hindurch und in Eingriff mit der Spannungsvorrichtung des Spannungselements des Werkzeugs geschraubt wird; wobei die Spannungsvorrichtung, um das Spannungselement unter eine vorher festgelegte Spannung zu bringen, aktiviert wird, während das Werkzeug derart manipuliert wird, dass das distale Endbereich des Werkzeugs gegen das letzte Element oder Befestigungselement der Reihe gestellt wird um die Spannungsbelastung entgegenzuwirken; wobei die Werkzeugklinkringklemmfassung aktiviert wird während die vorher festgelegte, von der Spannungsvorrichtung auf das Spannungselement ausgeübte Spannung, um den Klinkring nahe dem letzten Element oder dem Befestigungselement der Reihe auf das Spannungselement durch Kräuseln zu verklemmen, gehandhabt bleib, und wobei das Werkzeug vom Spannungselement entfernt wird.

## Revendications

1. Outil (26) applicateur de virole pour fixer en permanence une virole (24) possédant une ouverture s'étendant le long de son axe central, à un élément de tension flexible tendu (20) s'étendant à travers la virole, et englobant une portion de corps maniable (28) comportant un axe longitudinal et englobant des zones terminales proximale et distale; un dispositif de retenue de virole (48) dans la zone terminale distale de la portion de corps (28) pour retenir une virole dans une position apte à recevoir un élément de tension flexible inséré à travers la virole, l'axe central de la virole s'étendant dans une direction généralement transversale à l'axe longitudinal de la portion de corps; ainsi qu'un dispositif de déformation de virole (46) relié à la portion de corps pour procurer une déformation permanente à une virole située dans le dispositif de retenue de virole (48), ainsi qu'un moyen pour entraîner ledit dispositif de déformation de virole dans le but de déplacer ce dernier dans une direction généralement parallèle à l'axe longitudinal de la portion de corps pour déformer une virole située dans le dispositif de retenue de virole (48); caractérisé par une pince mobile (30) de l'élément de tension reliée à la portion de corps pour saisir un élément de tension (20) s'étendant à travers une virole située dans le dispositif de retenue de virole (48); un dispositif tendeur (78) relié à la portion de corps et associé en entraînement à la pince d'élément de tension (30) pour exercer une force de tension sur l'élément de tension flexible (20) s'étendant à travers une virole (24) située dans le dispositif de retenue de virole (48) et saisi par la pince; ainsi qu'un dispositif d'entraînement (68) pour entraîner le dispositif tendeur (78) de telle sorte qu'il provoque, de la part d'un élément de tension saisi s'étendant à travers une virole située dans le dispositif de retenue de virole, un déplacement à travers la virole et en direction de l'extrémité proximale de la portion de corps (28) pour tendre l'élément de tension.

2. Outil applicateur de virole selon la revendication 1, dans lequel le dispositif de déformation de virole comprend un poinçon à sertir (46); et caractérisé, en outre, par un dispositif de positionnement de poinçon (42, 52, 54) pour positionner le poinçon dans une position prédéterminée de saisie non déformante de virole par rapport au dispositif de retenue de virole.

3. Outil applicateur de virole selon la revendication 1, caractérisé en ce que ledit dispositif de retenue de virole (48) comprend une ouverture définie par une surface de paroi latérale dans ladite portion de corps à extrémité distale, ladite ouverture étant pratiquée pour que vienne s'y loger une virole (24) et pour y être supportée, ledit dispositif de déformation de virole (46) étant un poinçon à sertir englobant une extrémité distale située de façon à venir se mettre en contact avec une virole retenue dans ladite ouverture, et un arrangement de positionnement de poinçon (42, 52, 54) associé au poinçon pour positionner normalement l'extrémité distale du poinçon en position adjacente à ladite ouverture du dispositif de retenue, dans une position de saisie de la virole et de mise en contact non déformant avec cette dernière.

4. Outil applicateur de viroles selon la revendication 3, caractérisé en ce que la portion de corps à extrémité distale englobe une paroi (48a) s'étendant parallèlement à l'axe longitudinal de la portion de corps, l'ouverture (48) du dispositif de retenue de virole coupant ladite paroi; et dans lequel ladite extrémité distale dudit poinçon à sertir peut s'étendre jusque dans ladite ouverture dans une direction s'étendant perpendiculairement à la paroi latérale de l'ouverture.

5. Outil applicateur de virole selon l'une quelconque des revendications précédentes, caractérisé par un dispositif d'entraînement (36) entraîné par fluide pour entraîner le dispositif de déformation de virole (46) dans une position de sertissage de virole.

6. Outil applicateur de virole selon la revendication 5, caractérisé en ce que ledit dispositif d'entraînement (36) entraîné par fluide est porté par la portion de corps.

7. Outil applicateur de virole selon l'une quelconque des revendications précédentes, caractérisé en ce que le dispositif d'entraînement pour déplacer ledit dispositif tendeur (78) englobe un moteur (68) entraîné par fluide.

8. Outil applicateur de virole selon l'une quelconque des revendications précédentes, caractérisé par un système tendeur (66, 67) préréglé pour limiter la tension maximale exercée par le dispositif tendeur (78) sur un élément de tension (20).

9. Procédé pour relier conjointement une série d'éléments de fixateurs filetés (10, 12, 14), ladite série englobant des premier et dernier éléments (10, 14) de la série, comprenant le fait de :
- pratiquer des ouvertures dans lesdits éléments pour que vienne s'y loger un élément de tension flexible (20);
- visser un élément allongé de tension flexible (20) vers l'avant à travers lesdites ouvertures en série depuis le premier élément jusqu'au dernier élément de la série;
- procurer un premier moyen d'arrêt de mouvement (22) à une première extrémité de l'élément de tension flexible pour empêcher le mouvement de l'élément de tension vers l'avant à travers l'ouverture pratiquée dans le premier élément (10) de série;
- appliquer une tension préréglée sur l'élément de tension (20) dans une direction vers l'avant à partir d'un endroit situé au-delà du dernier élément (14) de la série, tandis que le premier moyen d'arrêt de mouvement (22) empêche le mouvement de l'élément de tension (20) vers l'avant par rapport au premier élément de la série;
- tout en maintenant ladite tension préréglée sur ledit élément de tension flexible, fixer l'élément de tension à l'encontre d'un mouvement longitudinal inverse par rapport au dernier élément de la série en procurant un second moyen d'arrêt de mouvement (24) sous la forme d'une virole à déformation permanente comportant une ouverture centrale, qui vient s'associer en permanence avec l'élément de tension (20) en position adjacente et au-delà du dernier élément (14) de la série, ladite virole empêchant le mouvement longitudinal inverse du moyen de tension à travers l'ouverture pratiquée dans le dernier élément de la série, les éléments de la série étant ainsi reliés l'un à l'autre; ladite étape consistant à associer en permanence la virole à l'élément de tension englobant le sertissage en permanence de la virole (24) sur l'élément de tension (20); dans lequel le processus procurant une tension et un sertissage est réalisé au moyen d'un outil applicateur de virole selon la revendication 1, l'outil (26) englobant un axe longitudinal et comportant des extrémités proximale et distale, un tendeur (30, 78) de l'élément de tension arrangé pour exercer une tension préréglée sur l'élément de tension en tirant l'élément de tension vers l'extrémité proximale de l'outil par rapport à l'extrémité distale de l'outil, et un dispositif de sertissage de virole (46) mobile le long de l'axe longitudinal de l'outil pour sertir une virole retenue à l'intérieur de l'outil à son extrémité distale sur l'élément de tension, ledit outil étant maniable pour le positionnement de la zone terminale distale de l'outil et de la virole en position adjacente au dernier élément (14) ou au dernier dispositif de fixation de la série, et dans lequel les étapes de tensionnage de l'élément de tension et de sertissage de la virole englobent le positionnement d'une virole dans l'outil, le vissage de l'élément de tension (20) à travers la virole (24) et en contact avec le tendeur de l'outil pour l'élément de tension; l'activation du tendeur pour tendre l'élément de tension avec une tension préréglée, tandis que l'outil est manié pour positionner la zone terminale distale de l'outil contre le dernier élément ou contre le dernier dispositif de fixation de la série pour contrecarrer la charge de tension; l'activation du dispositif de sertissage de virole de l'outil, tandis que la tension préréglée est maintenue sur l'élément de tension à l'intervention du tendeur pour sertir la virole à l'élément de tension en position adjacente au dernier élément ou au dernier dispositif de fixation de la série, et le retrait de l'outil par rapport à l'élément de tension.
